# EUROPEAN PATENT APPLICATION

(11) **EP 4 826 755 A1**
(43) Date of publication of application: **21.10.2026**
(21) Application number: 25183120.2
(22) Date of filing: 16.06.2025
(51) Int. Cl.: H01H 50/02, H01H 50/04

(54) **RELAY WITH HIGH-LOW VOLTAGE INSULATION STRUCTURE**

(30) Priority: 17.04.2025 CN 202510484289
(71) Applicant: Kunshan GLVAC YuanTong New Energy Technology Co., Ltd., Suzhou, Jiangsu 215300 (CN)
(72) Inventor: GU, Chunpeng, Suzhou City, 215300 (CN); LIU, Tianjie, Suzhou City, 215300 (CN); YANG, Jifan, Suzhou City, 215300 (CN)
(74) Representative: Hautier IP - MC/EP

(57) **Abstract**

The present invention provides a relay with a high-low voltage insulation structure, which relates to the technical field of relays, including: a high-voltage system, including an upper armature and an insulating frame, the upper armature and the insulating frame are fixedly arranged; a low-voltage system, including a magnetic pole plate; fixed feet, which are respectively fixedly connected to the insulating frame and the magnetic pole plate, and the fixed feet are made of metal. The present invention provides a relay with a high-low voltage insulation structure, which uses an insulating frame to fix the upper armature, and uses the insulating frame to achieve the insulation arrangement between the upper armature and the magnetic pole plate, thereby achieving insulation isolation between the high-voltage system and the low-voltage system, and solving the insulation problem between the high-voltage system and the low-voltage system. The insulating frame is fixedly connected to the magnetic pole plate by the fixed feet made of metal material, and the fixed feet made of metal material can achieve a higher connection strength with the magnetic pole plate, thereby ensuring the connection effect between the insulating frame and the magnetic pole plate, and ensuring the connection firmness between the insulating frame and the upper armature during the use of the relay.

## Description

### TECHNICAL FIELD

The present invention relates to the technical field of relays, and in particular to a relay with a high-low voltage insulation structure.

### BACKGROUND ART

Relays are divided into high-voltage systems and low-voltage systems. The high-voltage system includes static contacts, moving contact pieces, lower armatures, lower armature frames, upper armature frames, upper armatures and contact springs, etc. The low-voltage system includes magnetic pole plates, static iron cores, push rods, moving iron cores and reaction springs, etc. There is a technical problem of easy breakdown between the high-voltage system and the low-voltage system, mainly because the high-low voltage breakdown is easy to occur between the upper armature and the magnetic pole plate, causing damage to the contactor.

### SUMMARY

The purpose of the present invention is to provide a relay with a high-low voltage insulation structure to solve the technical problem that the high-low voltages of the relay are easy to break down in the prior art.

The present invention provides a relay with a high-low voltage insulation structure, the relay with a high-low voltage insulation structure comprises;
a high-voltage system, comprising an upper armature and an insulation frame, the upper armature and the insulation frame are fixedly arranged;
a low-voltage system, comprising a magnetic pole plate;
fixed feet, which are fixedly connected to the insulation frame and the magnetic pole plate, respectively, and the fixed feet are made of metal.

In an optional embodiment, the upper armature is integrally formed in the insulating frame.

In an optional embodiment, the fixed feet are fixedly connected to the insulating frame by plugging, hot riveting, bonding or injection molding.

In an optional embodiment, the insulating frame includes an upper armature frame and an insulating block, the upper armature frame and the insulation block are fixedly arranged, the insulation block and the fixed feet are fixedly connected, and the upper armature is fixedly arranged on the upper armature frame.

In an optional embodiment, the fixed feet are fixedly connected to the insulating block by plugging, hot riveting, bonding or injection molding.

In an optional embodiment, the high-voltage system further includes a lower armature and a lower armature frame, the lower armature is fixedly arranged on the lower armature frame, the lower armature frame can drive the lower armature to move toward or away from the upper armature, the lower armature frame is provided with a first limiting portion, during the movement of the lower armature frame, the insulating frame contacts and cooperates with the first limiting portion to limit the movement direction of the lower armature frame.

In an optional embodiment, the upper armature is integrally formed in the insulating frame.

In an optional embodiment, the insulating frame includes an upper armature frame and an insulating block, the upper armature frame and the insulating block are fixedly arranged, the insulating block and the fixed feet are fixedly connected, and the upper armature is fixedly arranged on the upper armature frame.

In an optional embodiment, the insulating block contacts and cooperates with the first limiting portion.

In an optional embodiment, the upper armature frame is provided with a second limiting portion, and the second limiting portion cooperates with the first limiting portion for limiting.

In an optional embodiment, the second limiting portion is provided with a limiting insulating block, and the second limiting portion contacts and cooperates with the first limiting portion through the limiting insulating block.

In an optional embodiment, the second limiting portion protrudes toward the first limiting portion.

In an optional embodiment, the first limiting portion protrudes toward the insulating frame.

In an optional embodiment, the lower armature frame is arranged on an inner side of the upper armature frame, and the two sides of the lower armature frame are respectively arranged opposite to the two sides of the upper armature frame, and at least one first limiting portion is arranged on each side of two sides of the lower armature frame.

In an optional embodiment, the fixing feet are fixedly connected to the magnetic pole plate by riveting or welding.

A relay with a high-low voltage insulation structure provided by the present invention has the following beneficial effects.

The upper armature is fixed by an insulating frame, and the insulating frame is used to realize the insulation arrangement between the upper armature and the magnetic pole plate, thereby realizing the insulation isolation between the high-voltage system and the low-voltage system, and solving the insulation problem between the high-voltage system and the low-voltage system. The insulating frame is fixedly connected to the magnetic pole plate by fixing feet made of metal material, and the fixing feet made of metal material can achieve a higher connection strength with the magnetic pole plate, thereby ensuring the connection effect between the insulating frame and the magnetic pole plate, and ensuring the connection firmness between the insulating frame and the upper armature during the use of the relay.

### BRIEF DESCRIPTION OF DRAWINGS

In order to more clearly illustrate the specific embodiment of the present invention or the technical solution in the prior art, the following will briefly introduce the drawings required for the specific embodiment or the prior art description. Obviously, the drawings described below are some embodiments of the present invention. For those ordinary skilled in this art, other drawings can be obtained based on these drawings without creative work.
Figure 1 is a first structural schematic diagram of the relay with a high-low voltage insulation structure provided in the first embodiment of the present invention;
Figure 2 is a second structural schematic diagram of the relay with a high-low voltage insulation structure provided in the first embodiment of the present invention;
Figure 3 is a first structural schematic diagram of the relay with a high-low voltage insulation structure provided in the second embodiment of the present invention;
Figure 4 is a second structural schematic diagram of the relay with a high-low voltage insulation structure provided in the second embodiment of the present invention;
Figure 5 is a first structural schematic diagram of the relay with a high-low voltage insulation structure provided in the third embodiment of the present invention;
Figure 6 is a second structural schematic diagram of the relay with a high-low voltage insulation structure provided in the third embodiment of the present invention;
Figure 7 is a first structural schematic diagram of the relay with a high-low voltage insulation structure provided in the fourth embodiment of the present invention;
Figure 8 is a second structural schematic diagram of the relay with a high-low voltage insulation structure provided in the fourth embodiment of the present invention;
Figure 9 is a first structural schematic diagram of the relay with a high-low voltage insulation structure provided in the fifth embodiment of the present invention;
Figure 10 is a second structural schematic diagram of the relay with a high-low voltage insulation structure provided in the fifth embodiment of the present invention.

Reference sign: 110-static contact; 120-moving contact piece; 130-upper armature; 140-insulating frame; 141-upper armature frame; 142-insulating block; 143-second limiting portion; 144-limiting insulating block; 150-lower armature; 160-lower armature frame; 161-first limiting portion; 210-magnetic pole plate; 220-fixing foot; 230-static iron core; 240-push rod; 250-moving iron core.

### DETAILED DESCRIPTION OF EMBODIMENTS

In order to make the purpose, technical solution and advantages of the embodiments of the present invention clearer, the technical solution in the embodiments of the present invention will be clearly and completely described below in conjunction with the drawings in the embodiments of the present invention. Obviously, the described embodiments are part of the embodiments of the present invention, not all of the embodiments. The components of the embodiments of the present invention generally described and shown in the drawings here can be arranged and designed in various different configurations.

Therefore, the following detailed description of the embodiments of the present invention provided in the drawings is not intended to limit the scope of the claimed invention, but only represents selected embodiments of the present invention. Based on the embodiments of the present invention, all other embodiments obtained by those ordinary skilled in the art without creative work are within the scope of protection of the present invention.

It should be noted that similar numbers and letters represent similar items in the following drawings, so when an item is defined in one drawing, it does not need to be further defined and explained in subsequent drawings.

In the description of the present invention, it should be noted that the terms "center", "up", "down", "left", "right", "vertical", "horizontal", "inside", "outside" and the like indicate the orientation or position relationship based on the orientation or position relationship shown in the drawings, or the orientation or position relationship in which the invention product is usually placed when in use, which is only for the convenience of describing the present invention and simplifying the description, rather than indicating or implying that the device or element referred to must have a specific orientation, be constructed and operated in a specific orientation, and therefore cannot be understood as a limitation of the present invention. In addition, the terms "first", "second", "third" and the like are only used to distinguish the description, and cannot be understood as indicating or implying relative importance.

In addition, the terms "horizontal", "vertical", "overhanging" and the like do not mean that the components are required to be absolutely horizontal or overhanging, but can be slightly tilted. For example, "horizontal" only means that its direction is more horizontal than "vertical", and does not mean that the structure must be completely horizontal, but can be slightly tilted.

In the description of the present invention, it is also necessary to explain that, unless otherwise clearly specified and limited, the terms "provide", "mount", "connect", and "attach" should be understood in a broad sense, for example, it can be a fixed connection, a detachable connection, or an integral connection; it can be a mechanical connection or an electrical connection; it can be a direct connection, or it can be indirectly connected through an intermediate medium, or it can be a communication between two components. For those ordinary skilled in the art, the specific meanings of the above terms in the present invention can be understood in specific situations.

Some embodiments of the present invention are described in detail in conjunction with the drawings below. In the absence of conflict, the following embodiments and features in the embodiments can be combined with each other.

### Embodiment 1

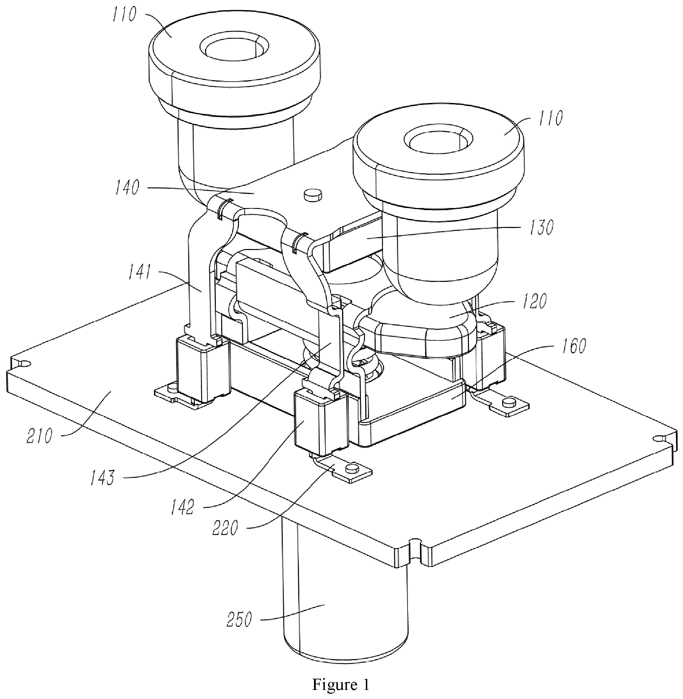

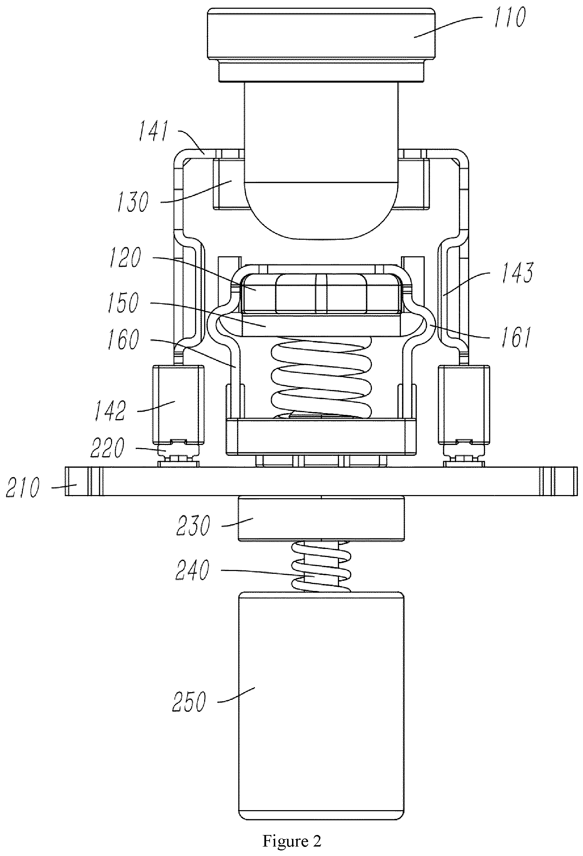

A relay with a high-low voltage insulation structure, as shown in Figure 1 and Figure 2, includes: a high-voltage system, including an upper armature 130 and an insulating frame 140, wherein the upper armature 130 and the insulating frame 140 are arranged in a fixed way; a low-voltage system, including a magnetic pole plate 210; fixed feet 220, wherein the fixed feet 220 are fixedly connected to the insulating frame 140 and the magnetic pole plate 210, respectively, and the fixed feet 220 are made of metal.

The upper armature 130 is fixed by an insulating frame 140, and the insulating frame 140 is used to realize the insulation arrangement between the upper armature 130 and the magnetic pole plate 210, thereby realizing the insulation isolation between the high-voltage system and the low-voltage system, and solving the insulation problem between the high-voltage system and the low-voltage system. The insulating frame 140 is fixedly connected to the magnetic pole plate 210 through the fixing feet 220 made of metal material, and the fixing feet 220 made of metal material can achieve a higher connection strength with the magnetic pole plate 210, thereby ensuring the connection effect between the insulating frame 140 and the magnetic pole plate 210, and ensuring the connection firmness between the insulating frame 140 and the upper armature 130 during the use of the relay.

As shown in Figure 1 and Figure 2, the high-voltage system includes not only an upper armature 130 and an insulating frame 140, but also a lower armature 150, a lower armature frame 160, a static contact 110 and a moving contact piece 120. The lower armature 150 is fixedly arranged on the lower armature frame 160, and the moving contact piece 120 is fixedly arranged between the lower armature 150 and the lower armature frame 160. The low-voltage system includes not only a magnetic pole plate 210, but also a static iron core 230, a push rod 240 and a moving iron core 250, wherein the push rod 240 passes through the magnetic pole plate 210 and is connected to the lower armature frame 160. When the moving iron core 250 moves, the moving iron core 250 drives the lower armature frame 160 to move through the push rod 240, thereby driving the lower armature 150 to move toward or away from the upper armature 130. Among them, the lower armature frame 160 is also provided with an insulating seat, and the insulating seat wraps the lower part of the lower armature frame 160, and the insulating seat is used to achieve the insulation isolation between the lower armature frame 160 and the magnetic pole plate 210. In other embodiments, optionally, the insulation isolation between the lower armature frame 160 and the magnetic pole plate 210 can also be achieved by other structures, for example, a corresponding insulating structure is provided on the magnetic pole plate 210.

The insulating frame 140 includes an upper armature frame 141 and an insulating block 142. As shown in Figure 1 and Figure 2, the upper armature frame 141 and the insulating block 142 are fixedly arranged, the insulating blocks 142 are fixedly connected to the fixed feet 220, and the upper armature 130 is fixedly arranged on the upper armature frame 141. Among them, the fixed feet 220 can be fixedly connected to the insulating block 142 by plugging, hot riveting, bonding or injection molding. The upper armature frame 141 can be made of metal, and the upper armature 130 can be fixed to the upper armature frame 141 by riveting, welding, etc. In this embodiment, the insulating block 142 can be made of insulating materials such as epoxy resin, polycarbonate, polystyrene, alumina ceramics, etc.

In this embodiment, as shown in Figure 2, the fixed feet 220 are fixedly connected to the magnetic pole plate 210 by riveting. In other embodiments, optionally, the fixed feet 220 can also be fixedly connected to the magnetic pole plate 210 by a fixed connection method such as welding. In this embodiment, fixed feet 220 made of metal material are used, which are convenient for realizing a fixed connection method such as riveting and welding between the magnetic pole plate 210. The fixed connection method such as riveting and welding can achieve a higher strength fixing effect, and can achieve a stable connection between the fixed feet 220 and the magnetic pole plate 210, and can achieve higher reliability in the long-term use of the relay. The fixed feet 220 can be made of metal materials such as aluminum and steel.

In this embodiment, as shown in Figure 1 and Figure 2, the lower armature frame 160 is provided with a first limiting portion 161. During the movement of the lower armature frame 160, the insulating frame 140 contacts and cooperates with the first limiting portion 161 to limit the movement direction of the lower armature frame 160, thereby making the movement of the lower armature frame 160 more accurate, avoiding shaking during the movement of the lower armature frame 160, and ensuring that the relative position of the static contact 110 and the moving contact piece 120 is more accurate.

In the present embodiment, as shown in Figure 1 and Figure 2 , the lower armature frame 160 is disposed on the inner side of the upper armature frame 141, and the two sides of the lower armature frame 160 are respectively disposed opposite to the two sides of the upper armature frame 141, and two legs are formed on the left and right sides of the lower armature frame 160, and each leg is provided with a first limiting portion 161, and the first limiting portion 161 protrudes toward the upper armature frame 141 of the insulating frame 140, and two legs are formed on the left and right sides of the upper armature frame 141, and each leg is connected to an insulating block 142, and each insulating block 142 is connected to a fixed foot 220. A second limiting portion 143 is provided on each leg on each side, and the second limiting portion 143 protrudes toward the first limiting portion 161, and the second limiting portion 143 cooperates with the first limiting portion 161 for limiting. In this embodiment, the first limiting portion 161 and the lower armature frame 160 are integrally formed, and are formed by partial bending of the lower armature frame 160. The second limiting portion 143 and the upper armature frame 141 are integrally formed, and are formed by partial bending of the upper armature frame 141. In this embodiment, when the moving contact piece 120 and the static contact 110 are in contact and conducted, the upper armature frame 141 and the lower armature frame 160 can also be conducted through the contact and matching of the first limiting portion 161 and the second limiting portion 143. At this time, the upper armature frame 141 and the lower armature frame 160 are both high-voltage systems, and the upper armature frame 141 is insulated and isolated from the magnetic pole plate 210 through the insulating block 142, and the lower armature frame 160 is insulated and isolated from the push rod 240 through the insulating seat, thereby achieving insulation isolation between the high-voltage system and the low-voltage system, and will not cause breakdown of the high-low voltage systems.

In this embodiment, the relative arrangement of the first limiting portion 161 and the second limiting portion 143 satisfies the requirement of maintaining contact during the entire process of the motion of the lower armature frame 160 to ensure the limiting effect. In other embodiments, optionally, the relative arrangement of the first limiting portion 161 and the second limiting portion 143 only satisfies the requirement of maintaining contact during part of the motion of the lower armature frame 160, such as the upper half stroke or the lower half stroke.

In other embodiments, optionally, a gap is provided between the first limiting portion 161 and the second limiting portion 143, and during the reciprocating motion of the lower armature frame 160, the second limiting portion 143 limits the first limiting portion 161 to prevent the lower armature frame 160 from shaking left and right during the reciprocating motion. When the lower armature frame 160 moves normally, the second limiting portion 143 and the first limiting portion 161 do not contact each other, so as to avoid the contact between the two affecting the reciprocating motion of the lower armature frame 160. When the lower armature frame 160 shakes left and right during the reciprocating motion, the second limiting portion 143 of the upper armature frame 141 contacts the first limiting portion 161 of the lower armature frame 160, so that the second limiting portion 143 plays a limiting role on the first limiting portion 161.

In other embodiments, optionally, the first limiting portion 161 can be an independent component, which is connected to the lower armature frame 160 through the mounting steps. The second limiting portion 143 can be an independent component, which is connected to the upper armature frame 141 through the mounting steps.

In other embodiments, optionally, the first limiting portion 161 is flatly arranged or concavely arranged on the lower armature frame 160, and correspondingly, the second limiting portion 143 is convexly arranged toward the first limiting portion 161.

In other embodiments, optionally, the second limiting portion 143 is flatly arranged or concavely arranged on the upper armature frame 141, and correspondingly, the first limiting portion 161 is protruded toward the second limiting portion 143.

In other embodiments, optionally, two legs are formed on the left and right sides of the upper armature frame 141, and the two legs on each side are provided with the second limiting portion 143.

In other embodiments, optionally, two legs are formed on the left and right sides of the lower armature frame 160, and the first limiting portion 161 is provided on one leg on each side.

### Embodiment 2

This embodiment also provides a relay with a high-low voltage insulation structure, and the main structure is the same as that of Embodiment 1. The following mainly describes the different parts.

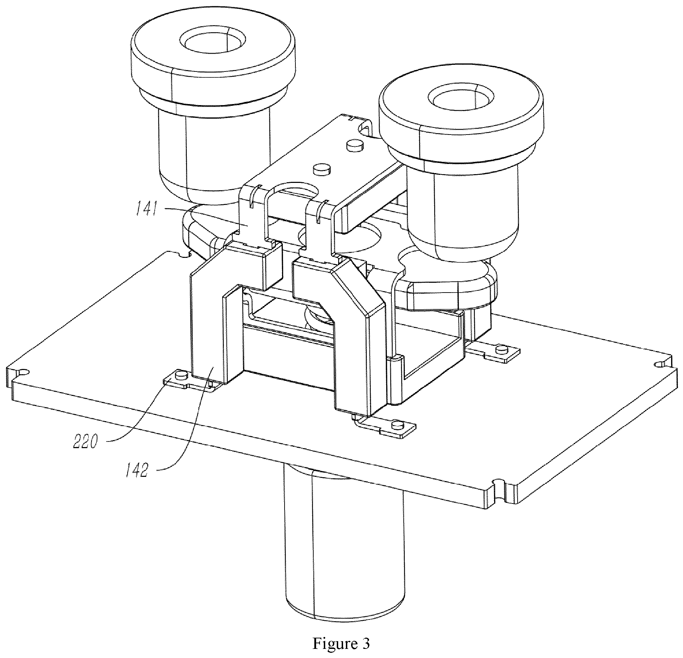

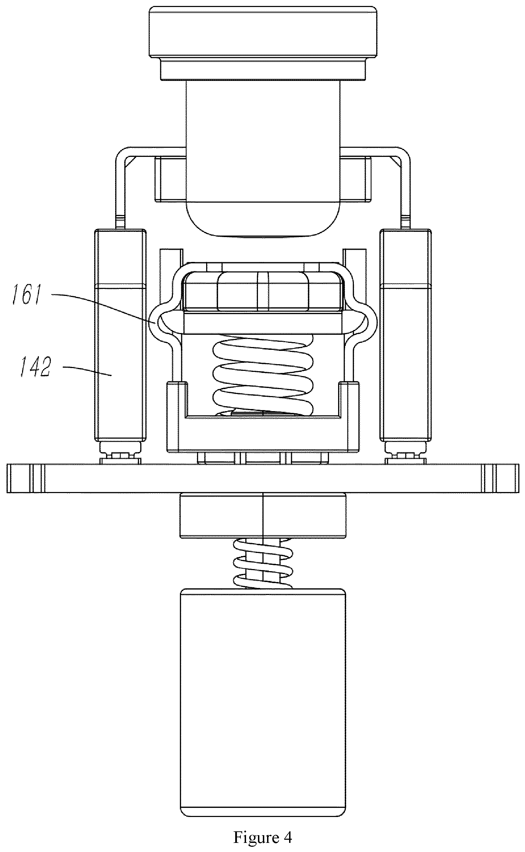

As shown in Figure 3 and Figure 4, the insulating frame 140 includes an upper armature frame 141 and an insulating block 142. Two legs are formed on the left and right sides of the lower armature frame 160, and a first limiting portion 161 is provided on each leg on each side. The first limiting portion 161 is protruding toward the insulating block 142 of the insulating frame 140, and the first limiting portion 161 of the lower armature frame 160 and the insulating block 142 are in contact and cooperate to achieve limiting. In this embodiment, the insulating block 142 is directly used to achieve the limiting effect, which can simplify the structure of the upper armature frame 141. At the same time, the insulating block 142 can also achieve insulation isolation between the upper armature frame 141 and the lower armature frame 160, further reducing the breakdown risk of the high-low voltage systems, and further improving the safety of the relay during use.

In this embodiment, the position of the insulating block 142 is sufficient to maintain contact with the first limiting portion 161 throughout the motion of the lower armature frame 160. As shown in Figure 3 and Figure 4, the insulating block 142 can be provided as a long strip-shaped member. The lower part of the insulating block 142 is connected to the fixed feet 220, and the lower part of the insulating block 142 is arranged close to the magnetic pole plate 210. The upper part of the insulating block 142 is connected to the upper armature frame 141. The upper part of the insulating block 142 extends to exceed the maximum upward movable position of the first limiting portion 161 of the lower armature frame 160 to ensure that the insulating block 142 can maintain contact with the first limiting portion 161 throughout the motion of the lower armature frame 160. The upper part of the insulating block 142 can also be arranged in other shapes according to the structure of the legs of the upper armature frame 141. As shown in Figure 3, the spacing between the lower parts of the two insulating blocks 142 on the same side is large, and the upper part of the insulating block 142 is connected to the two legs of the upper armature frame 141, and the spacing between the two legs is small. Correspondingly, the spacing between the upper parts of the two insulating blocks 142 on the same side is also small. The upper part of the insulating block 142 can be provided with a transverse extension structure. At this time, the longitudinal position of the transverse extension structure is higher than the maximum upward movable position of the first limiting portion 161 to avoid the situation where the transverse extension structure cannot limit the first limiting portion 161.

In other embodiments, optionally, the position of the insulating block 142 only satisfies that the insulating block 142 and the first limiting portion 161 remain in contact during part of the motion of the lower armature frame 160, such as the upper half stroke or the lower half stroke.

In other embodiments, optionally, a gap is provided between the first limiting portion 161 and the insulating block 142. During the reciprocating motion of the lower armature frame 160, the insulating block 142 limits the first limiting portion 161 to prevent the lower armature frame 160 from shaking left and right during the reciprocating motion. When the lower armature frame 160 moves normally, there is no contact between the insulating block 142 and the first limiting portion 161, so as to avoid the contact between the two affecting the reciprocating motion of the lower armature frame 160. When the lower armature frame 160 shakes left and right during the reciprocating motion, the insulating block 142 contacts the first limiting portion 161 of the lower armature frame 160, so as to limit the first limiting portion 161 by using the insulating block 142.

### Embodiment 3

This embodiment also provides a relay with a high-low voltage insulation structure, and the main structure is the same as that of Embodiment 2. The following mainly describes the different parts.

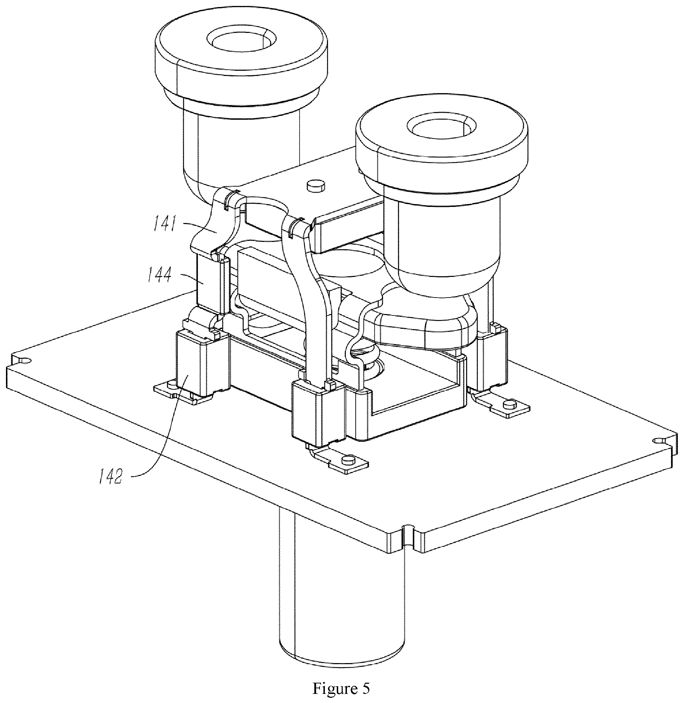

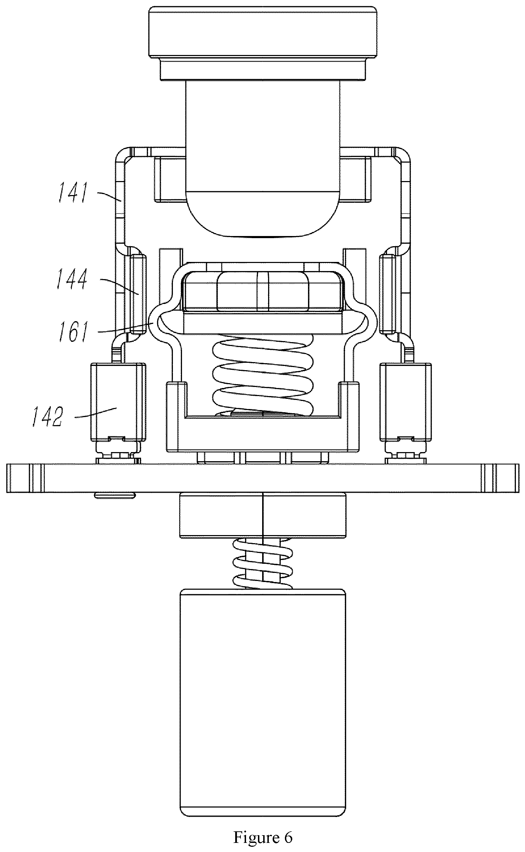

As shown in Figure 5 and Figure 6, two legs are formed on the left and right sides of the lower armature frame 160, and each leg is provided with a first limiting portion 161, and two legs are formed on the left and right sides of the upper armature frame 141, wherein a second limiting portion 143 is provided on each leg on each side, and the second limiting portion 143 is protruded toward the first limiting portion 161, and the second limiting portion 143 is provided with a limiting insulating block 144, and the second limiting portion 143 is in contact and cooperate with the first limiting portion 161 through the limiting insulating block 144. The limiting insulating block 144 can also achieve insulation isolation between the upper armature frame 141 and the lower armature frame 160, further reducing the breakdown risk of the high and low voltage systems, and further improving the safety of the relay during use. In this embodiment, the limiting insulating block 144 can be fixedly arranged on the first limiting portion 161 by an integral molding method, or the limiting insulating block 144 can adopt a split structure, the split structure is assembled to the first limiting portion 161, and then the limiting insulating block 144 is fixed to the first limiting portion 161 by bonding, welding, riveting, etc.

In this embodiment, the position of the limiting insulating block 144 is sufficient to maintain contact with the first limiting portion 161 throughout the motion of the lower armature frame 160. In other embodiments, optionally, the position of the limiting insulating block 144 only is sufficient to maintain contact between the insulating block 142 and the first limiting portion 161 during part of the motion of the lower armature frame 160, such as the upper half stroke or the lower half stroke.

In other embodiments, optionally, the first limiting portion 161 is flatly arranged or concavely arranged on the lower armature frame 160, and correspondingly, the second limiting portion 143 is protruded toward the first limiting portion 161, and the second limiting portion 143 is in contact and cooperate with the first limiting portion 161 through the limiting insulating block 144.

In other embodiments, optionally, the second limiting portion 143 is flatly arranged or concavely arranged on the upper armature frame 141, and correspondingly, the first limiting portion 161 is protruded toward the second limiting portion 143, and the second limiting portion 143 is in contact and cooperate with the first limiting portion 161 through the limiting insulating block 144.

In other embodiments, optionally, a gap is arranged between the first limiting portion 161 and the limiting insulating block 144, and during the reciprocating motion of the lower armature frame 160, the limiting insulating block 144 limits the first limiting portion 161 to prevent the lower armature frame 160 from shaking left and right during the reciprocating motion. When the lower armature frame 160 moves normally, the limiting insulating block 144 and the first limiting portion 161 do not contact each other, so as to avoid the contact between the two affecting the reciprocating motion of the lower armature frame 160. When the lower armature frame 160 shakes left and right during the reciprocating motion, the limiting insulating block 144 of the upper armature frame 141 contacts the first limiting portion 161 of the lower armature frame 160, so that the limiting insulating block 144 plays a limiting role on the first limiting portion 161.

### Embodiment 4

This embodiment also provides a relay with a high-low voltage insulation structure, and the main structure is the same as the above embodiments. The following mainly describes the different parts.

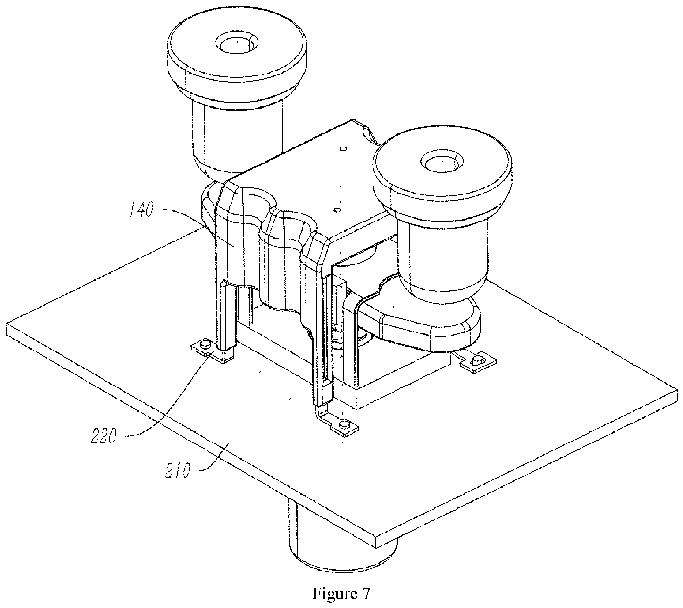

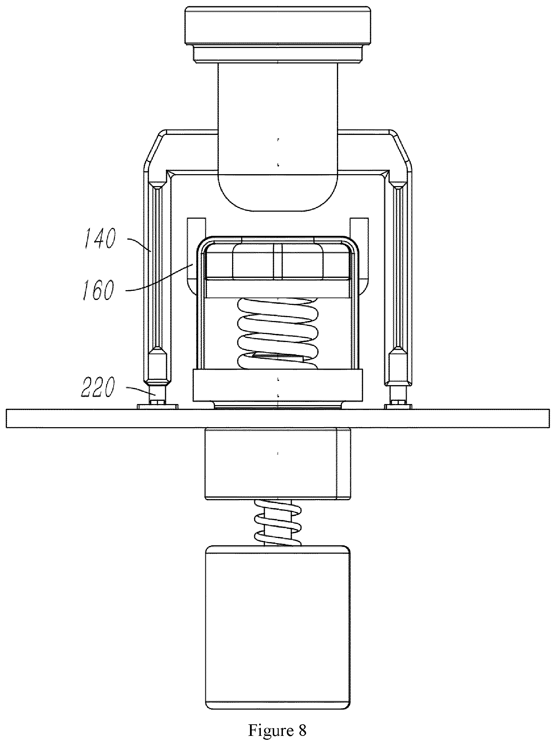

As shown in Figures 7 and 8, the upper armature 130 is integrally formed in the insulating frame 140, and the two side surfaces of the insulating frame 140 are complete and continuous surfaces. The two ends of the lower part of the two sides of the insulating frame 140 are respectively connected with fixed feet 220, and the fixed feet 220 are fixedly connected to the insulating frame 140 by plugging, hot riveting, bonding or injection molding. The upper armature 130 is not shown in the figure because it is integrally formed in the insulating frame 140.

No limiting structure is arranged between the lower armature frame 160 and the insulating frame 140, thereby simplifying the overall structure of the relay.

The use of an integrally formed insulating frame 140 has fewer parts, simpler production and assembly, and higher production accuracy.

In this embodiment, the insulating frame 140 can be made of materials such as polyvinyl chloride, polyethylene, polyimide, polytetrafluoroethylene, epoxy resin, polycarbonate, polystyrene, etc. that have insulating properties and are easy to be integrally formed.

### Embodiment 5

This embodiment also provides a relay with a high-low voltage insulation structure. The main structure is the same as that of Embodiment 4. The following mainly describes the different parts.

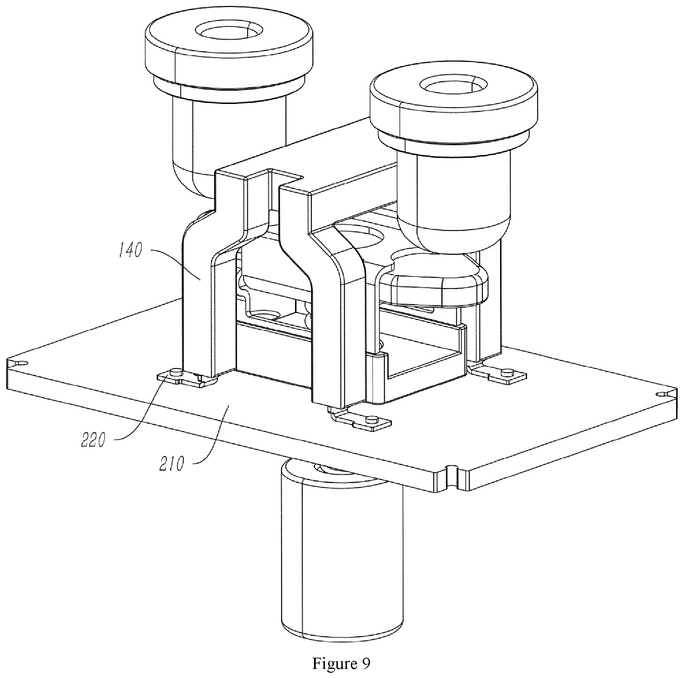

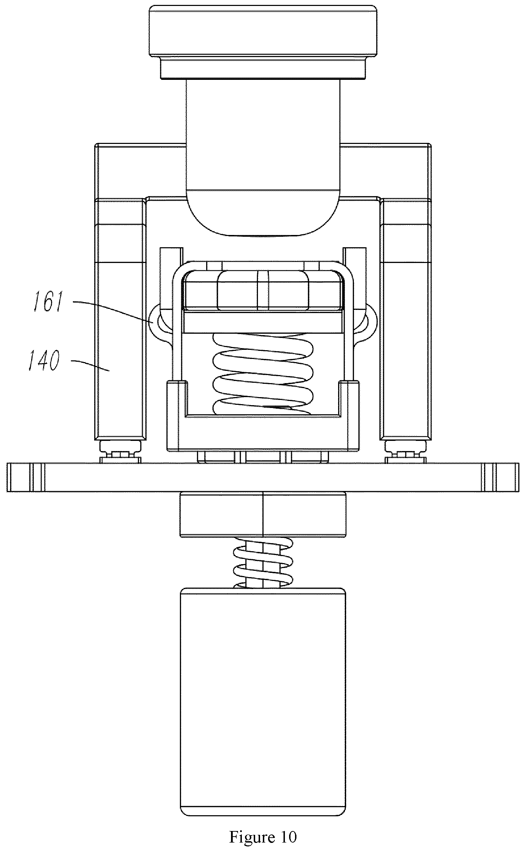

As shown in Figure 9 and Figure 10, two legs are formed on each side of both sides of the insulating frame 140, and two legs are formed on each left and right side of the lower armature frame 160. A first limiting portion 161 is provided on each leg on each side. The first limiting portion 161 protrudes toward the insulating frame 140, and the first limiting portion 161 and the insulating frame 140 are in contact and cooperate to limit the movement direction of the lower armature frame 160.

In other embodiments, optionally, two legs are formed on each left and right side of the lower armature frame 160, and each leg is provided with a first limiting portion 161.

In other embodiments, optionally, a gap is provided between the first limiting portion 161 and the insulating frame 140. During the reciprocating motion of the lower armature frame 160, the insulating frame 140 limits the first limiting portion 161 to prevent the lower armature frame 160 from shaking left and right during the reciprocating motion. When the lower armature frame 160 moves normally, the insulating frame 140 and the first limiting portion 161 do not contact each other, so as to avoid the contact between the two affecting the reciprocating motion of the lower armature frame 160. When the lower armature frame 160 shakes left and right during the reciprocating motion, the insulating frame 140 contacts the first limiting portion 161 of the lower armature frame 160, so that the insulating frame 140 plays a limiting role on the first limiting portion 161.

Finally, it should be noted that the above embodiments are only used to illustrate the technical solution of the present invention, rather than to limit it. Although the present invention is described in detail with reference to the above embodiments, those ordinary skilled in the art should understand that they can still modify the technical solutions described in the above embodiments, or replace some or all of the technical features therein by equivalent. These modifications or replacements do not make the essence of the corresponding technical solution deviate from the scope of the technical solution of the embodiments of the present invention.

## Claims

1. A relay with a high-low voltage insulation structure, **characterized in that** the relay with a high-low voltage insulation structure comprises:
a high-voltage system, comprising an upper armature (130) and an insulation frame (140), wherein the upper armature (130) and the insulation frame (140) are fixedly arranged;
a low-voltage system, comprising a magnetic pole plate (210);
fixed feet (220), wherein the fixed feet (220) are fixedly connected to the insulation frame (140) and the magnetic pole plate (210), respectively, and the fixed feet (220) are made of metal.

2. The relay with a high-low voltage insulation structure according to claim 1, wherein the upper armature (130) is integrally formed in the insulation frame (140).

3. The relay with a high-low voltage insulation structure according to claim 2, wherein the fixed feet (220) are fixedly connected to the insulation frame (140) by plugging, hot riveting, bonding or injection molding.

4. The relay with a high-low voltage insulation structure according to claim 1, wherein the insulation frame (140) comprises an upper armature frame (141) and an insulation block (142), the upper armature frame (141) and the insulation block (142) are fixedly arranged, the insulation block (142) and the fixed feet (220) are fixedly connected, and the upper armature (130) is fixedly arranged on the upper armature frame (141).

5. The relay with a high-low voltage insulation structure according to claim 4, wherein the fixed feet (220) are fixedly connected to the insulation block (142) by plugging, hot riveting, bonding or injection molding.

6. The relay with a high-low voltage insulation structure according to claim 1, wherein the high voltage system further comprises a lower armature (150) and a lower armature frame (160), the lower armature (150) is fixedly arranged on the lower armature frame (160), the lower armature frame (160) is able to drive the lower armature (150) to move toward or away from the upper armature (130), and the lower armature frame (160) is provided with a first limiting portion (161), and during a movement of the lower armature frame (160), the insulating frame (140) contacts and cooperates with the first limiting portion (161) to limit a movement direction of the lower armature frame (160).

7. The relay with a high-low voltage insulation structure according to claim 6, wherein the upper armature (130) is integrally formed in the insulating frame (140).

8. The relay with a high-low voltage insulation structure according to claim 6, wherein the insulation frame (140) comprises an upper armature frame (141) and an insulation block (142), the upper armature frame (141) and the insulation block (142) are fixedly arranged, the insulation block (142) and the fixed feet (220) are fixedly connected, and the upper armature (130) is fixedly arranged on the upper armature frame (141).

9. The relay with a high-low voltage insulation structure according to claim 8, wherein the insulation block (142) contacts and cooperates with the first limiting portion (161).

10. The relay with a high-low voltage insulation structure according to claim 8, wherein the upper armature frame (141) is provided with a second limiting portion (143), and the second limiting portion (143) cooperates with the first limiting portion (161) to limit.

11. The relay with a high-low voltage insulation structure according to claim 10, wherein the second limiting portion (143) is provided with a limiting insulation block (144), and the second limiting portion (143) contacts and cooperates with the first limiting portion (161) through the limiting insulation block (144).

12. The relay with a high-low voltage insulation structure according to claim 10, wherein the second limiting portion (143) protrudes toward the first limiting portion (161).

13. The relay with a high-low voltage insulation structure according to claim 6, wherein the first limiting portion (161) protrudes toward the insulation frame (140).

14. The relay with a high-low voltage insulation structure according to claim 6, wherein the lower armature frame (160) is arranged on an inner side of the upper armature frame (141), two sides of the lower armature frame (160) are respectively arranged opposite to two sides of the upper armature frame (141), and at least one first limiting portion (161) is arranged on each side of two sides of the lower armature frame (160).

15. The relay with a high-low voltage insulation structure according to claim 1, wherein the fixed feet (220) are fixedly connected to the magnetic pole plate (210) by riveting or welding.
